# FASCICULE DE BREVET EUROPEEN

(11) **EP 0 401 095 B1**
(45) Date de publication et mention de la délivrance du brevet: **03.11.1993**
(21) Numéro de dépôt: 90401395.0
(22) Date de dépôt: 23.05.1990
(51) Int. Cl.: B60K 23/04, B60K 23/08

(54) **Procédé et dispositif de pilotage d'un différentiel commandé, notamment pour véhicule automobile**
Verfahren und Vorrichtung zur Steuerung eines Differentials, insbesondere für ein Kraftfahrzeug
Process and apparatus for the control of a differential gear, especially for a motor vehicle

(30) Priorité: 31.05.1989 FR 8907184
(43) Date de publication de la demande: 05.12.1990
(73) Titulaire: AUTOMOBILES PEUGEOT, 75116 Paris (FR); AUTOMOBILES CITROEN, 92200 Neuilly-sur-Seine (FR)
(72) Inventeur: Roy, Philippe, F-95240 Cormeilles-en-Parisis (FR); Buan, Gérard, F-92110 Clichy (FR); Guillot, Jacky, F-78290 Croissy sur Seine (FR)
(74) Mandataire: Polus, Camille

(56) Documents cités:
- EP-A- 0 149 742
- EP-A- 0 245 069
- EP-A- 0 278 588
- GB-A- 2 130 313
- ATZ AUTOMOBILTECHNISCHE ZEITSCHRIFT. vol. 91, no. 1, janvier 1989, STUTTGART DEpages 15 - 23; SÖFFGE U.A.: "911 Carrera 4, Der Allrad-Porsche-Teil 2"

## Description

La présente invention concerne un procédé de pilotage d'un différentiel commandé notamment pour véhicule automobile et un dispositif pour la mise en oeuvre de ce procédé.

Un différentiel est une partie mécanique de la transmission d'un véhicule automobile qui permet aux roues motrices de prendre, en virage, deux vitesses de rotation différentes.

A cet effet, un véhicule à deux roues motrices posséde un différentiel disposé entre les roues motrices. Un véhicule à quatre roues motrices possède trois différentiels, un pour le train avant, un autre pour le train arrière et enfin un troisième entre les trains avant et arrière du véhicule.

Certains véhicules pour une utilisation en tout terrain possèdent une commande permettant de bloquer un ou plusieurs différentiels de façon à interdire tout glissement de traction ou patinage aux roues

Les différentiels peuvent être libres ou autobloquants, ou encore commandés (voir le document EP-A-149 742 qui décrit un procédé conforme au préambule de la revendication 1.

Les voitures de série possèdent en général un différentiel libre. Toute vitesse différentielle entre les roues motrices est autorisée. En cas de roulage sur sol à faible adhérence, la motricité du véhicule est faible car, lorsqu'une roue patine, tout le couple moteur se transmet à cette roue.

Certains véhicules, en général plutôt sportifs, possèdent un différentiel autobloquant. Dans ce cas, lorsqu'une roue motrice patine, le différentiel tend à se bloquer et transmet une partie du couple moteur sur la roue qui ne patine pas. La motricité du véhicule est ainsi améliorée et la vitesse différentielle entre les roues motrices tend à se réduire.

Cependant, les différentiels de ce type présentent un certain nombre de défauts.

En effet, en l'absence de patinage, certains différentiels autobloquants possèdent un léger blocage résiduel. L'association de ces différentiels à un système d'antiblocage de roue est alors extrêmement difficile à réaliser. Par ailleurs, certains différentiels autobloquants demandent également un temps de réponse relativement important.

Pour tous les différentiels autobloquants ou commandés mécaniques, les lois qui régissent le fonctionnement du différentiel sont des lois mécaniques qu'il est difficile d'ajuster précisément. En outre, une dispersion et une dérive des caractéristiques dans le temps sont observées.

Les procédés et les dispositifs de pilotage de ces différentiels peuvent utiliser une information concernant l'angle de braquage du volant.

Cependant, la mesure de cet angle de braquage du volant présente un certain nombre d'inconvénients dans la mesure où cette information doit être prise par des capteurs difficiles à mettre en oeuvre.

Le but de l'invention est donc de résoudre ces problèmes en proposant un procédé et un dispositif de pilotage d'un différentiel commandé qui soit simple, fiable, d'un prix de revient peu élevé et qui n'utilise pas d'informations relatives à l'angle de braquage du volant.

A cet effet, l'invention a pour objet un procédé de pilotage d'un différentiel commandé notamment pour véhicule automobile, dans lequel on détermine la valeur nominale d'un paramètre de pilotage du différentiel à partir de la vitesse du véhicule et de la charge du moteur et en ce qu'on corrige la valeur de ce paramètre en fonction d'une variable représentative de la différence de vitesse de rotation de roues du véhicule et ou d'arbres d'entrée et de sortie, reliés à ce différentiel et d'un signal représentatif de l'état du système de freinage du véhicule, caractérisé en ce qu'en phase de démarrage, pour une vitesse du véhicule inférieure à une valeur déterminée, on détermine si les variations de la variable représentative de la différence de vitesse sont supérieures à un seuil déterminé, si non on maintient la valeur du paramètre du pilotage du différentiel, et si oui, on incrémente la valeur de ce paramètre de façon proportionnelle à la différence de vitesse et à la charge du moteur et dès que la différence de vitesse décroît, on réduit la valeur du paramètre de pilotage selon une pente déterminée jusqu'à la valeur nominale.

Selon un autre aspect, l'invention a égale- ment pour objet un dispositif pour la mise en oeuvre du procédé tel que décrit précédemment.

L'invention sera mieux comprise à l'aide de la description qui va suivre, donnée uniquement à titre d'exemple et faite en se référant aux dessins annexés, sur lesquels :
- la Fig. 1 représente un schéma synoptique d'un dispositif pour la mise en oeuvre d un procédé selon l'invention; et
- la Fig. 2 représente un organigramme illustrant le procédé de pilotage selon l'invention appliqué à un véhicule automobile à roues avant motrices.

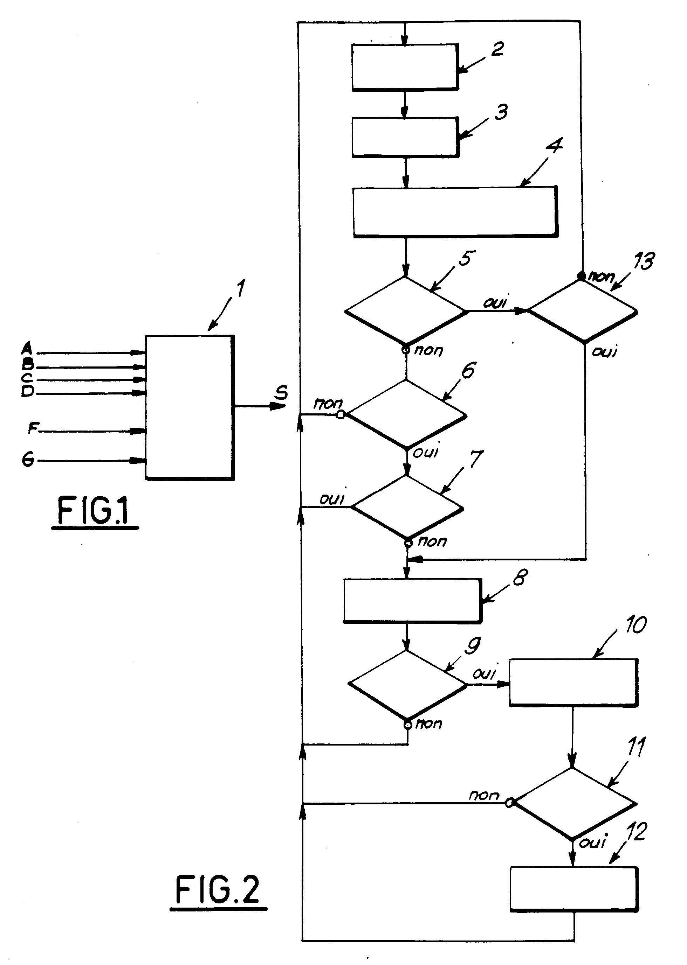

Ainsi qu'on peut le voir sur la Fig.1, qui représente un mode de réalisation d'un dispositif pour la mise en oeuvre d'un procédé de pilotage selon l'invention, ce dispositif comporte un calculateur 1 recevant sur ses entrées, des signaux A, B, C et D représentatifs respectivement des vitesses de rotation des roues avant droite, avant gauche, arrière droite et arrière gauche du véhicule.

Par ailleurs, ce calculateur reçoit également un signal F représentatif de la charge du moteur et un signal G représentatif de l'état du système de freinage du véhicule.

Le signal S représente la sortie de ce calculateur, cette sortie agissant sur un organe de commande du différentiel du véhicule.

Les informations A,B,C et D concernant les vitesses de rotation des roues du véhicule, peuvent par exemple être dérivées d'un calculateur d'antiblocage de roues, tandis que l'information relative à la charge du moteur peut être constituée par une information relative à la position d'un papillon de commande du débit des gaz d'admission de celui-ci, à la pression d' un turbocompresseur si le moteur du vèhicule en est équipé, au système d'injection, etc...

L'information relative à l'état du système de freinage du véhicule est quant à elle une information en tout ou rien indiquant si le conducteur actionne la pédale de frein du véhicule ou non.

La sortie S du calculateur 1 agissant sur un organe de commande du différentiel, peut par exemple agir sur une électrovanne, une servo-valve, un moteur électrique, etc..

A titre d'exemple, dans la suite de la description, on considère que le calculateur agit sur une servo-valve de pilotage du différentiel, la grandeur physique agissant sur ce différentiel étant alors une pression hydraulique. On se place également à titre d'exemple, dans le cas où le véhicule est muni d'un train avant moteur.

Comme cela sera décrit plus en détail par la suite, le calculateur 1 utilise les informations d'entrée pour déterminer la valeur nominale d'un paramètre de pilotage du différentiel à partir de la vitesse du véhicule et de la position d'un dispositif permettant de faire varier la charge du moteur et corrige la valeur de ce paramètre en fonction d'une variable représentative de la différence de vitesse de rotation des roues motrices du véhicule ou d'arbres d'entrée et de sortie, reliés à ce différentiel et d'un signal représentatif de l'état du système de freinage du véhicule.

Comme on peut le voir sur la Fig.2, qui représente un organigramme illustrant le fonctionnement du calculateur pour la mise en oeuvre d'un procédé de pilotage selon l'invention, celui-ci débute par une étape 2 d'acquisition des informations décrites en regard de la Fig. 1. En 3, est prévue une étape de calcul de la différence de vitesse entre les roues avant droite et avant gauche du véhicule dans l'exemple décrit. Cette information concernant la différence de vitesse sera utilisée d'une manière décrite par la suite.

En 4, est prévue une étape de calcul ou de lecture dans une table de la pression nominale de pilotage du différentiel. Cette pression est fonction de la vitesse N du véhicule et de la charge du moteur. La vitesse N du véhicule est choisie comme étant la vitesse minimale des quatre roues du véhicule. Ce choix n'est plus valable en cas de freinage, mais de toute façon, dans ce cas, le différentiel est déverrouillé et l'information de vitesse du véhicule n'est plus prise en compte.

Ainsi le procédé de pilotage selon l'invention consiste dans un premier temps à déterminer la valeur nominale d'un paramètre de pilotage du différentiel à partir de la vitesse du véhicule et de la position d'un dispositif permettant de faire varier la charge du moteur.

Comme cela sera décrit plus en détail par la suite, la valeur de ce paramètre est ensuite corrigée en fonction d'une variable représentative de la différence de vitesse de rotation de roues du véhicule et/ ou d'arbres d'entrée et de sortie, reliés à ce différentiel, selon que le véhicule possède deux ou quatre, roues motrices, et d'un signal représentatif de l'état du système de freinage du véhicule.

En 5, est prévue une étape pour déterminer si le véhicule est en phase de démarrage ou en phase de roulage. Lors de cette étape, la vitesse N du véhicule est comparée à une valeur déterminée, par exemple de 20 Km/h.

Si la vitesse du véhicule est inférieure par exemple à 20 km/h, le véhicule est en phase de démarrage et la valeur absolue de la différence de vitesse entre les roues avant gauche et droite du véhicule, est comparée en 6 à un seuil déterminé.

Dans le cas où la valeur absolue de la différence de vitesse est supérieure à ce seuil déterminé, une étape est prévue en 7 pour déterminer si le véhicule effectue des manoeuvres de parcage ou non. Ceci est réalisé en déterminant si les variations de la variable représentative de la différence de vitesse sont supérieures à un seuil déterminé ou non.

En effet, dans le cas où le véhicule effectue des manoeuvres de parcage, les variations de la différence de vitesse sont relativement lentes et dans ce cas, il n'est pas nécessaire de corriger la pression nominale calculée précédemment.

Dans le cas où les variations de la différence de vitesse sont relativement brutales, on est alors dans une phase de patinage due à une perte d'adhérence.

Dans ce cas, il est prévu en 8, une phase d'incrémentation de la valeur de la pression de pilotage du différentiel, de façon proportionnelle à la différence de vitesse et à la charge du moteur.

Dès que la différence de vitesse décroit en 9, on est amené à une étape 10 dans laquelle on réduit la valeur du paramètre de pilotage du différentiel selon une pente déterminée jusqu'à la valeur nominale. Cette pente peut être fixe, par exemple de 20.10⁵ Pa/s, ou fonction de plusieurs paramètres, tels que la différence de vitesse ou la charge du moteur, etc. .

Si pendant le patinage, la différence de vitesse change de signe, par exemple en 11, c'est à dire qu'il y a transfert du patinage d'une roue sur l'autre, ce qui peut produire des à-coups et une perte d'adhérence des roues motrices, on réduit la pression de commande en 12, de façon à déverrouiller le différentiel afin de ne pas faire perdre d'adhérence à la roue adhérente. La pression est réduite selon une pente fixe, par exemple de 20.10⁵ Pa/s ou en fonction de plusieurs paramètres comme décrit précédemment.

En cas de réponse positive au test en 5, c'est à dire si le véhicule est en phase de roulage, sa vitesse étant supérieure à la valeur déterminée, on est amené à une étape 13 dans laquelle on détermine si la valeur absolue de la différence de vitesse divisée par la vitesse du vèhicule N est supérieure à une valeur déterminée ou non, par exemple égale à 0,1.

En cas de réponse négative à ce test, on maintient la valeur de la pression et on est ramené à la phase 2 d'acquisition de données, tandis qu'en cas de réponse positive à celui-ci, on est amené à l'étape 8 d'incrémentation de la pression.

Il est à noter que lorsque le véhicule est en phase de roulage, il n'y a pas de possibilités de manoeuvre de parcage.

En cas de réponses négative au test en 6, et positive au test en 7, on est également ramené à l'étape initiale d'acquisition de données.

Si les réponses aux tests en 9 et en 11 sont négatives, on est également ramené à l'étape initiale 2.

Lors d'une phase de freinage du véhicule, cette phase étant déterminée par l'information relative à l'état du système de freinage du véhicule, il y a lieu de libérer le différentiel le plus rapidement possible.

Dès que l'information sur l'état du système de freinage du véhicule indique une action de l'utilisateur sur celui-ci, la pression de pilotage du différentiel est réduite, quel que soit l'état des autres informations.

Ceci n'est pas illustré sur l'organigramme de la Fig.2, dans la mesure où l'information freinage étant prioritaire, le calculateur scrute celle-ci en permanence et débloque le différentiel quel que soit son travail en cours, donc à un point quelconque de l'organigramme.

Il est également possible pour déterminer s'il y a patinage ou non des roues du véhicule, de comparer la différence de vitesse des roues avant du véhicule avec celle des roues arrière de celui-ci au lieu de comparer uniquement la différence de vitesse des roues motrices de celui-ci.

Il est ainsi possible de mieux distinguer le patinage d'un virage.

Dans le cas où la vitesse du véhicule est inférieure ou égale à 20 km/h, si la valeur absolue de la différence de vitesse des roues avant moins la différence de vitesse des roues arrière du véhicule est supérieure à un seuil déterminé, on a un patinage. De même, si la vitesse du véhicule est supérieure à 20 Km/h et dans le cas où la valeur absolue de la différence de vitesse des roues avant divisée par la vitesse du véhicule moins la différence de vitesse des roues arrière divisée par la vitesse du véhicule est supérieure à un seuil déterminé, on a un patinage.

## Revendications

1. Procédé de pilotage d'un différentiel commandé notamment pour véhicule automobile, dans lequel on détermine la valeur nominale d'un paramètre de pilotage du différentiel à partir de la vitesse du véhicule et de la position d'un dispositif permettant de faire varier la charge du moteur et en ce qu'on corrige la valeur de ce paramètre en fonction d'une variable représentative de la différence de vitesse de rotation de roues du véhicule et/ou d'arbres d'entrée et de sortie, reliés à ce différentiel et d'un signal représentatif de l'état du système de freinage du véhicule, caractérisé en ce qu'en phase de démarrage, pour une vitesse du Véhicule inférieure à une valeur déterminée, on détermine si les variations de la variable représentative de la différence de vitesse sont supérieures à un seuil déterminé, si non on maintient la valeur du paramètre du pilotage du différentiel, et si oui, on incrémente la valeur de ce paramètre de façon proportionnelle à la différence de vitesse et à la charge du moteur et dès que la différence de vitesse décroit, on réduit la valeur du paramètre de pilotage selon une pente déterminée jusqu'à la valeur nominale.

2. Procédé selon la revendication 1, caractérisé en ce que dans le cas où la variable représentative de la différence de vitesse change de signe, on réduit le paramètre de commande selon une pente déterminée pour déverrouiller le différentiel.

3. Procédé selon l'une quelconque des revendications précédentes, caractérisé en ce qu'en phase de roulage du véhicule, pour une vitesse du véhicule supérieure à une valeur déterminée, si la valeur absolue de la différence de vitesse divisée par la vitesse du véhicule est supérieure à un seuil déterminé, on incrémente la valeur du paramétre de façon proportionnelle à la différence de vitesse et à la charge du moteur et dès que cette différence de vitesse décroit, on réduit la valeur du paramètre de pilotage selon une pente déterminée.

4. Procédé selon la revendication 3, caractérisé en ce que dans le cas où la variable représentative de la différence de vitesse change de signe, on réduit le paramètre de commande selon une pente déterminée pour déverrouiller le différentiel.

5. Procédé selon l'une quelconque des revendications précédentes, caractérisé en ce qu en phase de freinage, on réduit la valeur du paramétre de pilotage pour déverrouiller le différentiel.

6. Dispositif pour la mise en oeuvre du procédé selon l'une quelconque des revendications précédentes, caractérisé en ce qu'il comporte des moyens (1) de détermination de la valeur nominale d'un paramètre de pilotage du différentiel à partir de la vitesse du véhicule et de la position d'un dispositif permettant de faire varier la charge du moteur et des moyens de correction (1) de la valeur de ce paramétre en fonction d'une variable représentative de la différence de vitesse de rotation de roues du véhicule et/ou d'arbres d'entrée et de sortie, reliés à ce différentiel et d'un signal représentatif de l'état du systéme de freinage du véhicule.

## Patentansprüche

1. Verfahren für die Steuerung eines Differentials, insbesondere des Differentials eines Kraftfahrzeuges, in dem der nominale Wert eines Paramaters für die Steuerung eines Differentials auf der Grundlage der Fahrgeschwindigkeit des Kraftfahrzeuges und der Position einer Vorrichtung bestimmt wird, welche es erlaubt, die Motorlast zu verändern und der Wert dieses Parameters entsprechend einer für die Differenz der Rotationsgeschwindigkeit der Räder und/oder der Einlaß- oder Auslaßwellen, welche an dieses Differential angeschlossen sind, repräsentativen Variablen und entsprechend einem für den Zustand der Bremsanlage des Kraftfahrzeuges repräsentativen Signal korrigiert wird, **dadurch gekennzeichnet, daß** in der Anfahrphase bei einer Geschwindigkeit des Fahrzeuges, welche unter einem bestimmten Wert liegt, festgestellt wird, ob die Schwankungen der für die Geschwindigkeitsdifferenz repräsentativen Variablen über einem bestimmten Schwellenwert liegen und, falls nicht, der Wert des Parameters für die Steuerung des Differentials aufrechterhalten und, falls ja, der Wert dieses Parameters proportional zu der Geschwindigkeitsdifferenz und der Motorlast inkrementiert wird, und daß, sobald die Geschwindigkeitsdifferenz abnimmt, der Wert des Parameters für die Steuerung nach einer vorbestimmten Kurve bis auf den nominalen Wert abgesenkt wird.

2. Verfahren nach Anspruch 1,
**dadurch gekennzeichnet, daß** falls die für die Geschwindigkeitsdifferenz repräsentative Variable das Vorzeichen ändert, der Parameter für die Steuerung nach einer vorbestimmten Kurve reduziert wird, um das Differential zu entriegeln.

3. Verfahren nach einem der vorausgegangenen Ansprüche,
**dadurch gekennzeichnet, daß** in der Rollphase des Fahrzeuges bei einer Geschwindigkeit des Fahrzeuges, welche über einem vorbestimmten Wert liegt, und soweit der absolute Wert der Geschwindigkeitsdifferenz geteilt durch die Geschwindigkeit des Fahrzeugs über einem vorbestimmten Schwellenwert liegt, der Wert dieses Parameters proportional zu der Geschwindigkeitsdifferenz und der Motorlast inkrementiert wird und daß, sobald diese Geschwindigkeitsdifferenz abnimmt, der Wert des Parameters für die Steuerung nach einer vorbestimmten Kurve reduziert wird.

4. Verfahren nach Anspruch 3,
**dadurch gekennzeichnet, daß** falls die für die Geschwindigkeitsdifferenz repräsentative Variable das Vorzeichen ändert, der Parameter für die Steuerung nach einer vorbestimmten Kurve reduziert wird, um das Differential zu entriegeln.

5. Verfahren nach einem der vorausgegangenen Ansprüche,
**dadurch gekennzeichnet, daß** in der Bremsphase der Wert des Parameters für die Steuerung reduziert wird, um das Differential zu entriegeln.

6. Vorrichtung für die Durchführung des Verfahrens nach einem der vorausgegangenen Ansprüche,
**dadurch gekennzeichnet, daß** sie Mittel (1) für die Bestimmung des nominalen Wertes eines Parameters für die Steuerung des Differentials auf der Grundlage der Geschwindigkeit des Fahrzeuges und der Position einer Vorrichtung aufweist, welche es erlauben, die Motorlast zu verändern, und daß sie Mittel (1) für die Korrektur des Wertes dieses Parameters entsprechend einer Variablen aufweist, welche für die Differenz der Rotationsgeschwindigkeit der Räder des Fahrzeuges und/oder der Einlaß- und Auslaßwellen, welche an dieses Differential angeschlossen sind, repräsentativ ist, und Mittel für die Korrektur eines Signals enthält, welches für den Zustand der Bremsanlage des Fahrzeuges repräsentativ ist.

## Claims

1. Process and apparatus for the control of a differential gear, in particular for a motor vehicb, in which the nominal value of one control parameter of the differential gear is determined from the speeded of the vehicle and from the position of a device for varying the load of the motor, and in that the value of this parameter is corrected as a function of a variable representing the difference in the speed of rotation of the wheels of the vehicle and/or of the input and output shafts connected to said differential gear, and as a function of a signal representing the state of the vehicle braking system, characterised in that in the starting phase, for a vehicle speed lower than a set value, it is ascertained whether the variations of the variable representing the speed differential are higher than a set threshold, and if not, the value of the differential gear control parameter is maintained, and if so, the value of this parameter is increased proportionally to the speed differential and to the load of the motor. and as soon as the speed differential decreases, the control parameter value is reduced according to a set gradient until the nominal value is reached.

2. Process according to claim 1, characterised in that if the variable representing the speed differential changes sign. the control parameter is reduced according to a set gradient in order to release the differential gear.

3. Process according to any one of the preceding claims, characterised in that when the vehicle is in motion, for a vehicle speed higher than a set value, if the absolute value of the speed differential divided by the vehicle speed is higher than a set threshold, the value of the parameter is increased proportionally to the speed differential and to the load of the motor, and as soon as the speed differential decreases, the control parameter value is reduced according to a set gradient .

4. Process according to claim 3, characterised in that if the variable representing the speed differential changes sign, the control parameter is reduced according to a set gradient in order to release the differential gear.

5. Process according to any one of the preceding claims, characterised in that in the braking phase. the value of the control parameter is reduced in order to release the differential gear.

6. Device for carrying out the process according to any one of the preceding claims, characterised in that it comprises means (1) for determining the nominal value of a control parameter of the differential gear from the vehicle speed and from the position of a device for varying the load of the motor, and means (1) for correcting the value of this parameter according to a variable representing the difference in the speed of rotation of the wheels of the vehicle and/or input and output shafts connected to said differential gear, and as a function of a signal representing the state of the vehicle braking system.
